# EUROPEAN PATENT APPLICATION

(11) **EP 3 450 842 A1**
(43) Date of publication of application: **06.03.2019**
(21) Application number: 17205424.9
(22) Date of filing: 05.12.2017
(51) Int. Cl.: F21V 33/00, F21L 4/02, F21L 4/08, G03B 29/00, H04N 7/18, F21V 31/00, F21V 23/00, F21Y 115/10

(54) **HANDHELD ILLUMINATING DEVICE WITH A MONITORING FUNCTION**

(30) Priority: 01.09.2017 TW 106129868
(71) Applicant: Hunt Electronic Co., Ltd., Keelung City (TW)
(72) Inventor: LEE, Shin-Rong, Keelung City (TW)
(74) Representative: Pallini Gervasi, Diego

(57) **Abstract**

A handheld illuminating device with a monitoring function includes a main body (10), lighting units (21) and a video module (22) at the front end of the main body (10). The main body (10) is provided with a wireless module (23), a display control module (24), a processor (25) and a power supply module (26). The processor (25) is electrically connected to the lighting units (21), the video module (22), the wireless module (23), the display control module (24) and the power supply module (26). The handheld illuminating device captures real-time video information by the video module (22). The wireless module (23) provides location information and transmits the real-time video information for remote storage, achieving the purpose of real-time monitoring.

## Description

### 1. Field of the Invention

The invention relates to a handheld illuminating device and, in particular, to a handheld illuminating device with a monitoring function.

### 2. Description of Related Art

Nowadays, it is very common to have residence community or business building security monitoring systems. Nevertheless, many communities or businesses still keep patrolling security staff. This is because patrols help scare off burglars, or even collect evidence and make an arrest. Basically, the patrolling security staff is equipped with a flashlight, baton, walkie-talkie, portable gadgets, etc. The flashlight is used for illumination and the baton for defense. Since there are many different tools in the standard equipment, it is inconvenient for the patrolling security staff to collect evidence and take an action in time.

The Taiwan Pat. No. I312270, entitled "baton-type monitor" includes a front case and a rear case. The front case is provided with an illuminating module, a night vision module and a video module. A display control module is disposed outside the front case, and is electrically connected to the illuminating module, the night vision module and the video module, respectively. The rear case has the shape of a long cylinder with one end connected to the front case. The rear case accommodates a battery for supplying the working power to the illuminating module, the night vision module and the video module on the front case. The baton-type monitor thus provides the two functions of evidence collection and baton.

To sum up, in the prior art, the patrolling security staff has too many tools to carry, making the patrols inconvenient. Although the above-mentioned patent has both illuminating and video functions, these functions may fail due to large impacts when the security staff uses the baton for self-defense. In particular, once the video function fails, the monitoring function is also lost. Therefore, it still cannot meet the requirements of real-time monitoring and ensuring security at the same time for the security staff. It is thus imperative to provide a better solution.

In view of the foregoing, it is an objective of the invention to provide a handheld illuminating device with a monitoring function. When a user uses it, real-time video information is captured and transmitted via wireless connections to a remote end for storage. Therefore, it can collect real-time evidence and perform real-time monitoring simultaneously.

To achieve the above-mentioned objective, the handheld illuminating device with a monitoring function includes:
a main body;
a video module disposed at the front end of the main body for capturing real-time video information;
a plurality of lighting units disposed around the video module for illumination;
a wireless module disposed inside the main body for transceiving wireless signals;
a display control module disposed on the main body for a user to operate;
a power supply module disposed inside the main body and electrically connected with the video module, the lighting units, the wireless module, and the display control module, respectively; and
a processor disposed inside the main body and electrically connected with the video module, the lighting units, the wireless module, the display control module, and the power supply module, respectively;
wherein the wireless module provides location information and sends the real-time video information to a remote device for storage.

With the above-mentioned structure, the front end of the main body of the invention has several lighting units and the video module. When its user holds and uses the main body, it captures real-time video information via the wireless module, and transmits the real-time video information to the remote end for storage. It therefore achieves the goals of real-time evidence collection and monitoring.
In the drawings:
FIG. 1 is a block diagram of the present invention in a preferred embodiment;
FIG. 2 is a block diagram of the present invention in another embodiment;
FIG. 3 is a schematic perspective view according to a preferred embodiment of the invention;
FIG. 4 is a schematic perspective view according to another embodiment of the invention;
FIG. 5 is an exploded view of a preferred embodiment of the invention;
FIG. 6 is an exploded view of another embodiment of the invention;
FIG. 7 is a partially enlarged bottom view of a preferred embodiment of the invention when the lower case is removed;
FIG. 8 is another partially enlarged bottom view of the preferred embodiment of the invention;
FIG. 9 is a schematic view showing one application of the preferred embodiment; and
FIG. 10 is a schematic view showing another application of the preferred embodiment.

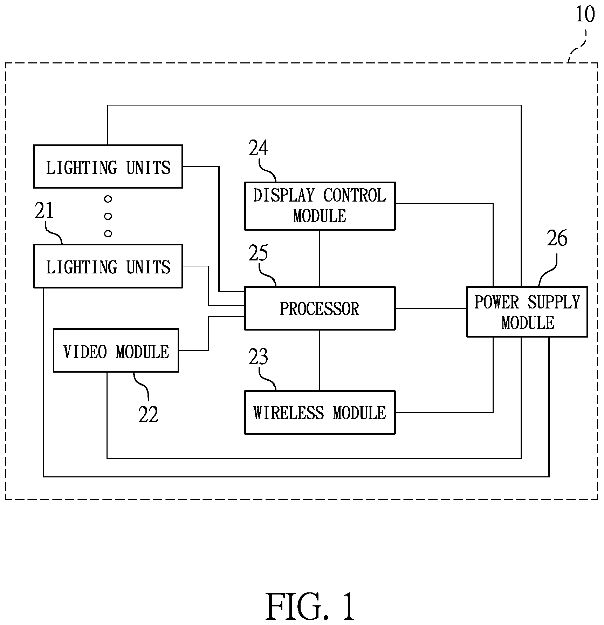

Please refer to FIG. 1 for a preferred embodiment of the handheld illuminating device with a monitoring function according to the invention. The embodiment includes a main body 10 of the handheld illuminating device, a plurality of lighting units 21, a video module 22, a wireless module 23, a display control module 24, a processor 25, and a power supply module 26. The video module 22 is disposed at the front end of the main body 10 to capture real-time video information. The lighting units 21 are disposed around the video module 22 for illumination. The wireless module 23 is disposed inside the main body 10 for transceiving wireless signals. The display control module 24 is provided on the main body 10 for its user to operate. The power supply module 26 is disposed inside the main body 10, with electrical connections to the lighting units 21, the video module 22, the wireless module 23, and the display control module 24. The processor 25 is disposed inside the main body 10, with electrical connections to the lighting units 21, the video module 22, the wireless module 23, the display control module 24, and the power supply module 26. When a user holds the main body 10 for a patrol duty, he or she can choose whether to use the lighting units 21 to illuminate the environment. At the same time, the video module 22 captures real-time video information. Through the wireless module 23, location information is provided. The real-time video information is then transmitted to a remote end for storage, thereby simultaneously collecting evidence and monitoring in real time. In particular, in addition to capturing the real-time video information, the video module 22 also records real-time audio information of the surroundings and sends the recorded real-time audio information to the remote end for storage. The remote end can be a central management system (CMS).

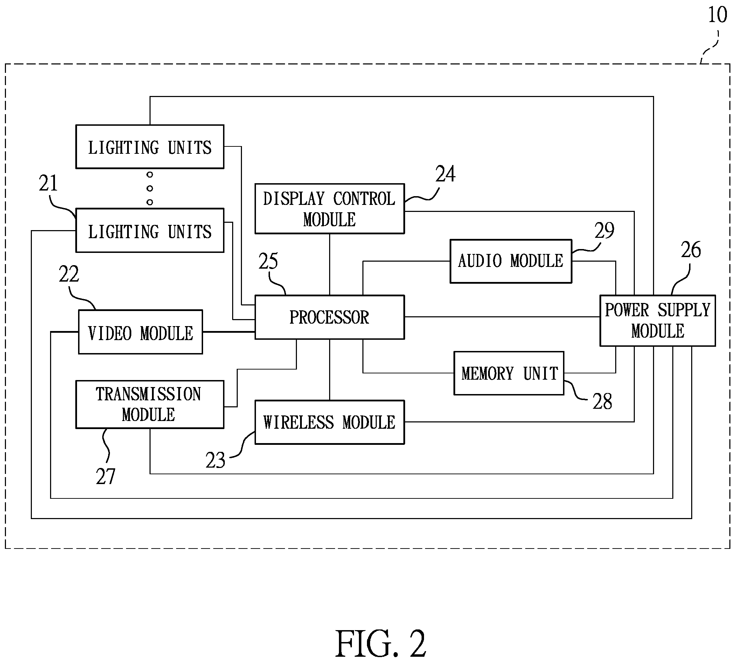

Please refer to FIG. 2 for the system structure of another embodiment of the invention. In this embodiment, the handheld illuminating device further includes a signal transmission module 27, a memory unit 28, and an audio module 29. The signal transmission module 27 is disposed on the main body 10, with electrical connections to the processor 25 and the power supply module 26. The memory unit 28 is disposed on the main body 10, with electrical connections to the processor 25 and the power supply module 26. The audio module 29 is disposed inside the main body 10, with electrical connections to the processor 25 and the power supply module 26.

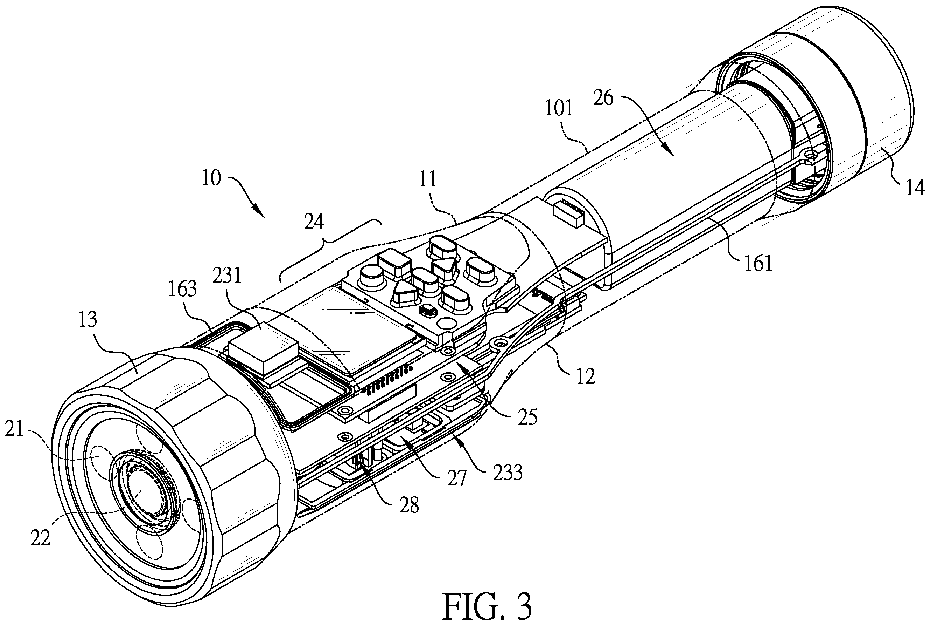

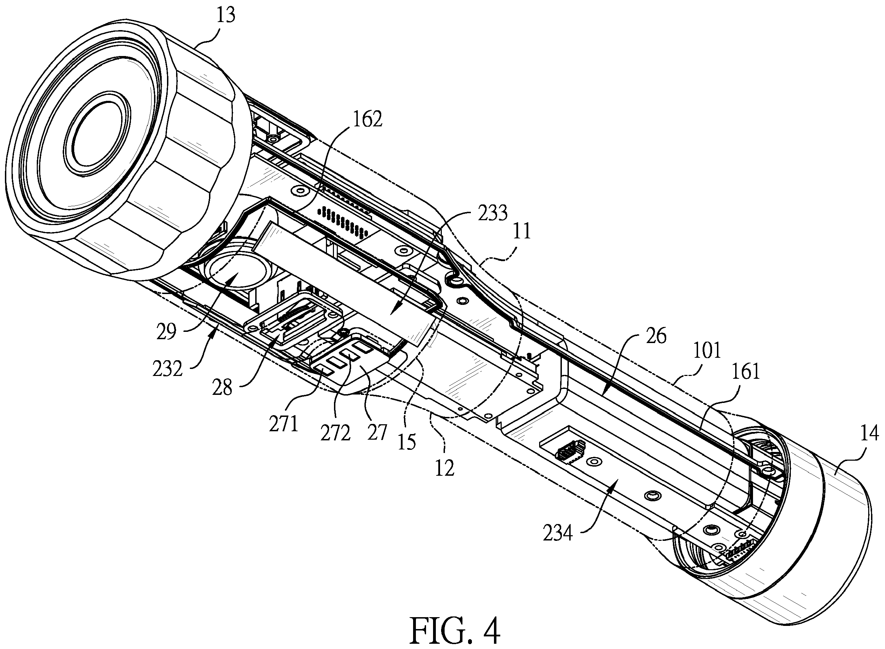

For the detailed structure of the handheld illuminating device, please refer to FIGS. 3 and 4. The main body 10 includes an upper case 11, a lower case 12, a front cover 13 pervious to light, a rear cap 14, and a lower case cap 15. The upper case 11 and the lower case 12 are connected and fixed by screws. The front cover 13 then covers the front ends of the upper case 11 and the lower case 12; and the rear cap 14 covers the rear ends of the upper case 11 and the lower case 12. This fixes the combination of the upper case 11, the lower case 12, the front cover 13, and the rear cap 14. The lower case cap 15 is disposed on the lower case 12. The rear ends of the upper and lower cases 11, 12 are further mounted with a grip sheath 101, which has an anti-slip surface for the convenience of the user to hold.

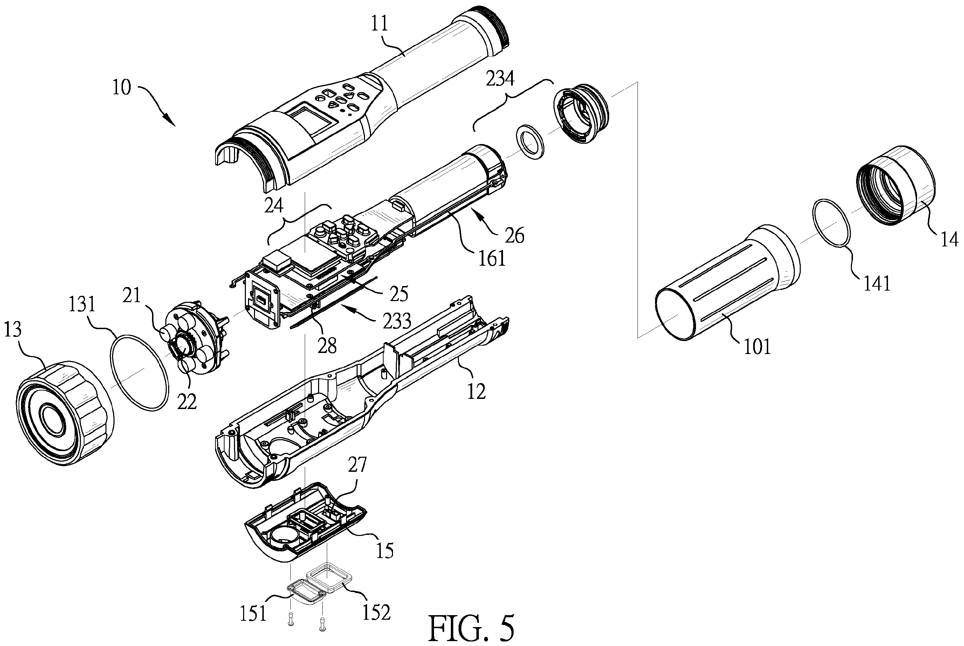

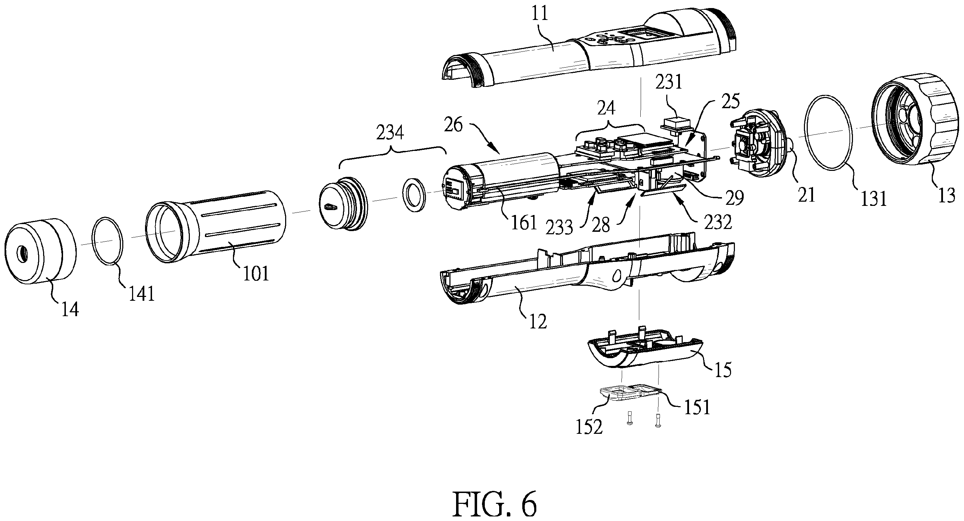

Please further refer to FIGS. 5 and 6. In the preferred embodiment, the outer wall of the upper case 11 is formed with a plurality of first openings corresponding to the top portion of the display control module 24, so that display control module 24 is exposed via the first openings for the user to operate. Besides, the outer wall of the lower case 12 is formed with a plurality of second openings corresponding to the bottom of the processor 25, so that the signal transmission module 27 and the memory unit 28 are exposed via the second openings for the convenience of connections with an external computer or storage device. Moreover, the lower case cap 15 is formed with a plurality of third openings, so that the signal transmission module 27 and the memory unit 28 are exposed via the third openings for the convenience of connections with an external computer or storage device. The lighting units 21 further include a plurality of white LEDs and/or a plurality of infrared (IR) LEDs. The white LEDs and the IR LED can be disposed around the video module 22. The emitted light passes through the front cover 13 to illuminate the environment. The video module 22 is a camera with a variable or fixed focal length.

In the preferred embodiment, the wireless module 23 can include a GPS module 231, a Wi-Fi module 232, a mobile communication module 233 and a radio sensing module 234. More explicitly, the mobile communication module 233 can be a 4G mobile communication module or a mobile communication module of a higher specification. The radio sensing module 234 can be a radio frequency identification (RFID) module. The GPS module 231 is disposed in the front part inside the main body 10. The Wi-Fi module 232 is disposed in the right part inside the main body 10. The mobile communication module 233 is disposed in the left part inside the main body 10, opposite to the Wi-Fi module 232. The radio sensing module 234 is disposed in the rear part of the main body 10. The display control module 24 can include an LCD display and an input interface, and is disposed inside the main body 10, behind the GPS module 231.

Please refer to FIGS. 4 and 5. The signal transmission module 27 includes two signal transmission contacts 271 and two charge contacts 272. The two charge contacts 272 electrically connect to the power supply module 26, and are located on the outer side of the lower case 12, protected by the lower case cap 15.

The memory unit 28 is disposed in the front part at the bottom inside the main body 10. More explicitly, the second openings formed on the lower case 12 allow the insertion of an external memory card. Moreover, the second openings formed on the lower case 12 allow the insertion of a subscriber identity module (SIM) card, so that the mobile communication module 233 can transceive data.

The audio module 29 can include a buzzer, and is disposed in the front part at the bottom inside the main body 10. Thus, the audio module 29 and the GPS module 231 are disposed opposite to each other vertically.

To protect the memory unit 28 and the signal transmission module 27, the bottom of the lower case cap 15 further has a first waterproof and dustproof cap 151 and a second waterproof and dustproof cap 152. The first waterproof and dustproof cap 151 covers and protects the memory unit 28. The second waterproof and dustproof cap 152 covers and protects the signal transmission module 27.

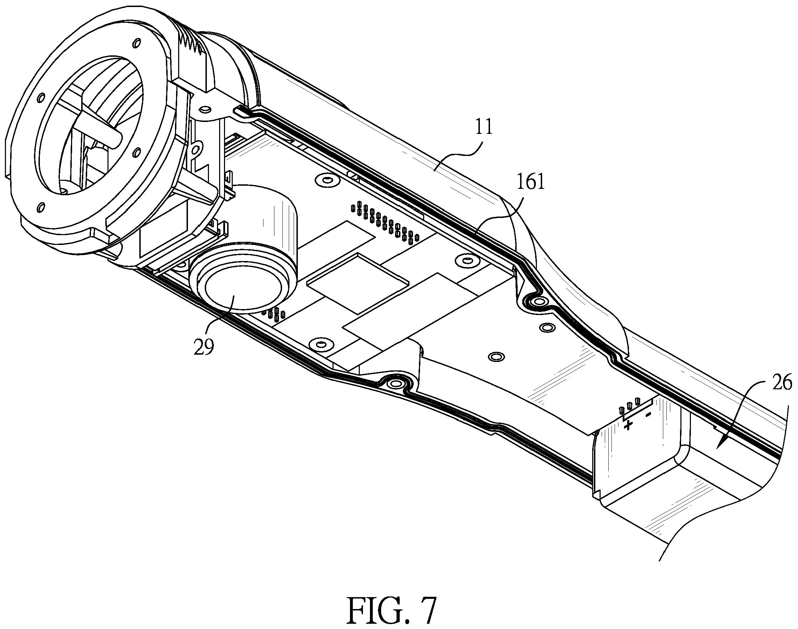

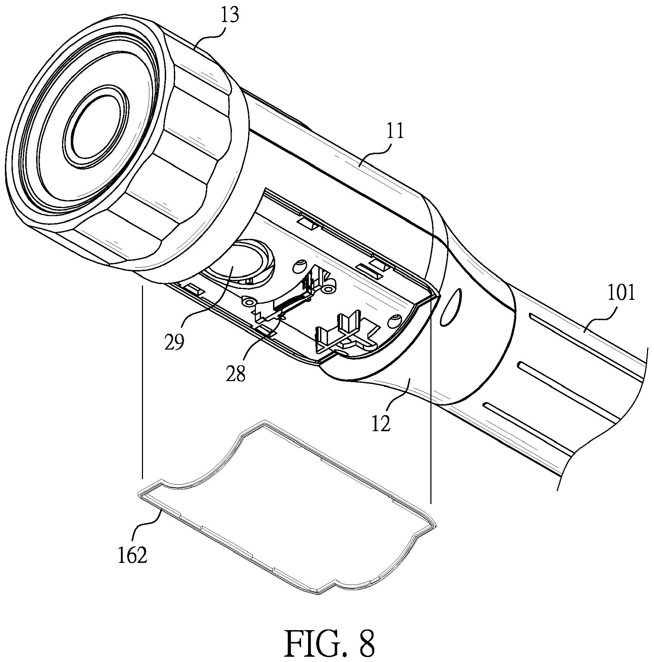

Please refer to FIGS. 3 and 7. To provide better waterproof and dustproof effects, a waterproof and dustproof part 161 is inserted between the upper case 11 and the lower case 12. Please refer to FIGS. 4 and 8. A second waterproof and dustproof rib 162 is inserted between the rims of the second openings on the lower case 12 and the lower case cap 15. Please refer again to FIG. 3. A third waterproof and dustproof rib 163 is inserted underneath the GPS module 231. The combination of the first waterproof and dustproof rib 161, the second waterproof and dustproof rib 162, and the third waterproof and dustproof rib 163 enhances the protection function.

To provide waterproof and dustproof effects between the main body 10 and the front cover 13 as well as the rear cap 14, a first protection 131 is disposed inside the front cover 13 and a second protection ring 141 is disposed inside the rear cap.

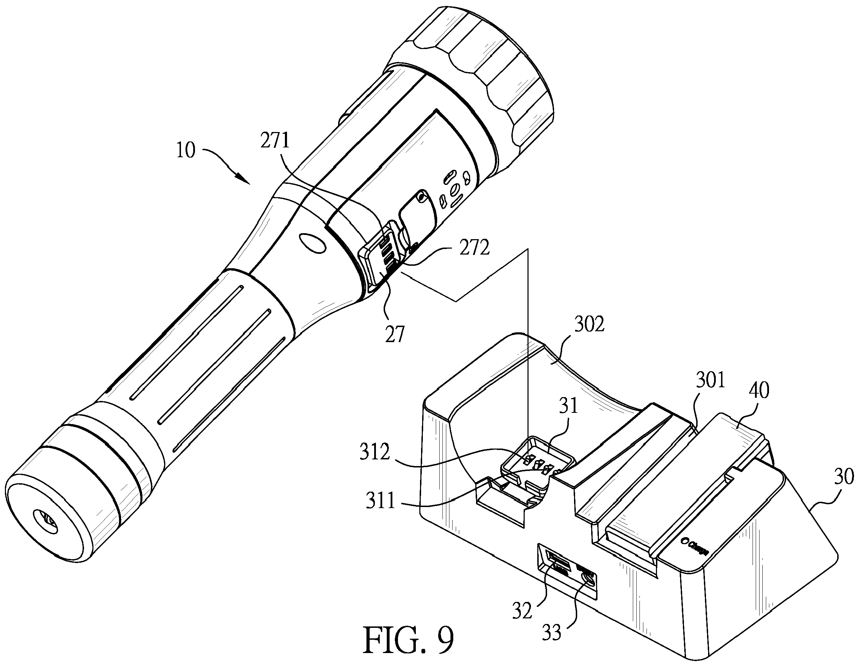

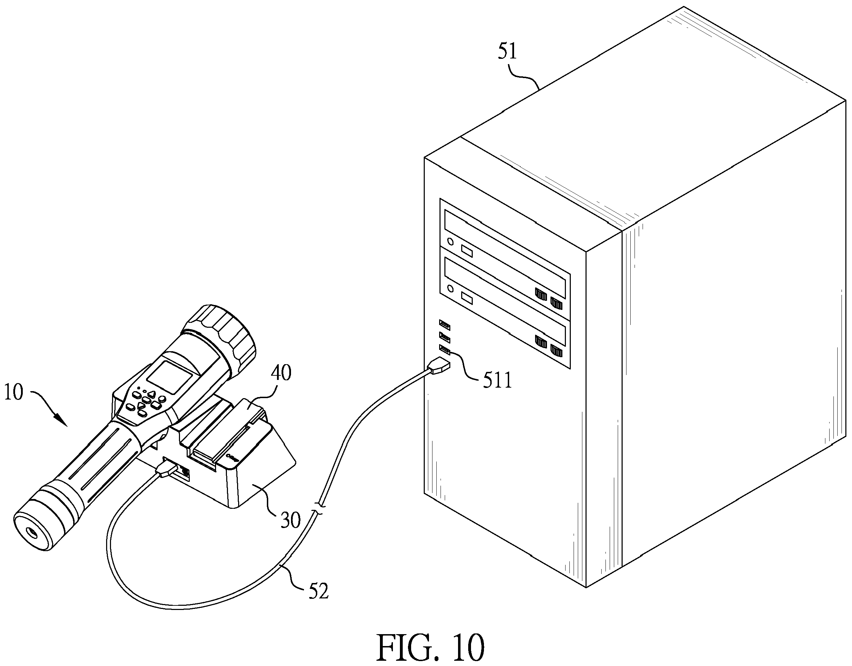

Please refer to FIGS. 9 and 10. The handheld illuminating device can be charged on a charging base 30. The charging base 30 is formed with a first slot 301 and a second slot 302. The first slot 301 has a charging part (not shown) therein. The second slot 302 has a connection interface 31 therein. The connection interface 31 has two charge contacts 311 and two signal transmission contacts 312. One side of the charging base 30 is further provided with a USB port 32 and a power terminal 33. The first slot 301 is for holding and charging a spare power supply module 40. The spare power supply module 40 is to replace the power supply module 26 of the handheld illuminating device. The second slot 302 is for the main body 10. The signal transmission module 27 of the main body 10 can connect to the connection interface 31, so that the two signal transmission contacts 271 of the signal transmission module 27 electrically connect to the signal transmission contacts 311 of the connection interface 31 for data transmissions. The two charge contacts 272 of the signal transmission module 27 electrically connect to the charge contacts 312 of the connection interface 31 for charging the power supply module 26 inside the main body 10. The power terminal 33 connects to a power supply for charging the spare power supply module 40 and the main body 10.

The charging base 30 can further electrically connect to a host 51. The charging base 30 electrically connects with the USB port 32 to a USB port 511 via a signal line 52, thereby transmitting data to the host 51.

According to the above-mentioned structure, the following describes applications of the handheld illuminating device.

With the lighting units 21, including IR LEDs, the handheld illuminating device can record video information even at dark night. The video information recorded in real time is thus still clear at night or in dark places.

Besides, with the Wi-Fi module 232 and the mobile communication module 233, the handheld illuminating device has the function of connecting to the Internet. Therefore, the user can operate the display control module 24 to send the real-time video information to a remote end for storage or confirmation.

When a security person holds the handheld illuminating device and does the patrol duty, the GPS module 23 continuously positions the handheld illuminating device and provides or outputs data about the location of the handheld illuminating device as the security person moves around. Through the Wi-Fi module 232 or the mobile communication module 233, such data are transmitted to the remote end. The remote end then generates a trajectory on a digital map (e.g., the Google map) according to the received location information. A user at the remote end can check or confirm the patrolling conditions and path of the security person.

When the security person arrives at a specific checkpoint, the radio sensing module 234 has radio sensing with a sensor fixed at the checkpoint, thereby generating a sensing signal. After the processor 25 receives the sensing signal, the sensing signal is sent by the Wi-Fi module 232 or the mobile communication module 233 to the remote end for the user at the remote end to confirm the safety of the security person.

When the security person encounters some accident during the patrol, he or she can enter in real time some information via the display control module 24. Such information is transmitted in real time via the Wi-Fi module 232 or the mobile communication module 233 to the remote end for the remote end to confirm or help, increasing the safety of the security person.

Moreover, as the security person holds the handheld illuminating device to perform a patrol, he or she can also use the video module 22 to record real-time audio information of the surroundings in addition to the video information. Such information is also transmitted via the Wi-Fi module 232 or the mobile communication module 233 in real time to the remote end for confirmation.

Besides, as the handheld illuminating device is placed on the charging base 30, electrical connections are established between the signal transmission contacts 271 of the signal transmission module 27 and the signal transmission contacts 311 of the charging base 30 as well as between the charge contacts 272 of the signal transmission module 27 and the charge contacts 312 of the charging base 30 for charging. When the USB port 32 of the charging base 30 connects to the USB port 511 of the host 51 via the transmission line 52, the handheld illuminating device transmits the real-time video information stored in the memory unit 28 by the video module 22 directly to the host 51 for storage, preserving the real-time video information for future uses.

## Claims

1. A handheld illuminating device with a monitoring function, **characterized in that** the handheld illuminating device comprising:
a video module (22) for capturing real-time video information;
a plurality of lighting units (21) for illumination;
a wireless module (23) for transceiving wireless signals;
a display control module (24) for a user to operate;
a power supply module (26), electrically connecting to the video module (22), the lighting units (21), the wireless module (23), and the display control module (24); and
a processor (25), electrically connecting to the video module (22), the lighting units (21), the wireless module (23), the display control module (24), and the power supply module (26);
wherein location information of the handheld illuminating device is provided by the wireless module (23), and the real-time video information is sent to a remote end for storage.

2. The handheld illuminating device with a monitoring function as claimed in claim 1 further comprising: a signal transmission module (27), a memory unit (28) and an audio module (29); wherein the signal transmission module (27), the memory unit (28) and the audio module (29) are electrically connected to the processor (25) and the power supply module (26).

3. The handheld illuminating device with a monitoring function as claimed in claim 1, wherein the plurality of the lighting units (21) comprises a plurality of white LEDs and/or a plurality of infrared (IR) LEDs;
the video module (22) includes a camera with an adjustable or fixed focal length;
the wireless module (23) includes a GPS module (231), a Wi-Fi module (232), a mobile communication module (233) and a radio sensing module (234); and
the display control module (24) includes an LCD display and an input interface.

4. The handheld illuminating device with a monitoring function as claimed in claim 2, wherein the signal transmission module (27) has two signal transmission contacts (271) and two charge contacts (272), the two charge contacts (272) of the signal transmission module (27) are electrically connected to the power supply module (26); and
the memory unit (28) includes a memory card.

5. A handheld illuminating device with a monitoring function, comprising:
a main body (10);
a video module (22) disposed at a front end of the main body for capturing real-time video information;
a plurality of lighting units (21) mounted around the video module (22) for illumination;
a wireless module (23) mounted in the main body (10) for transceiving wireless signals;
a display control module (24) disposed on the main body (10) for a user to operate;
a power supply module (26) disposed in the main body (10) and electrically connected with the video module (22), the lighting units (21), the wireless module (23), and the display control module (24); and
a processor (25) disposed inside the main body (10) and electrically connected to the video module (22), the lighting units (21), the wireless module (23), the display control module (24), and the power supply module (26);
wherein the wireless module (23) provides location information of the handheld illuminating device and transmits the real-time video information to a remote end.

6. The handheld illuminating device with a monitoring function as claimed in claim 5, wherein the main body (10) has an upper case (11), a lower case (12), a front cover (13) pervious to light, a rear cap (14) and a lower case cap (15);
the upper case (11) and the lower case (12) are combined and fixed with the rear cap (14) via the front cover (13); and
at least one first opening for exposing the display control module (24) is formed on a top of the upper case (11).

7. The handheld illuminating device with a monitoring function as claimed in claim 6 further comprising:
a signal transmission module (27), a memory unit (28), and an audio module (29), wherein the signal transmission module (27), the memory unit (28) and the audio module (29) are electrically connected to the processor (25) and the power supply module (26);
the signal transmission module (27), the memory unit (28), and the audio module (29) are disposed in the main body (10);
at least one second opening for exposing the signal transmission module (27) and the memory unit (28) is formed on a bottom of the lower case (12); and
at least one third opening for exposing the signal transmission module (27) and the memory unit (28) is formed on a bottom of the lower case cap (15).

8. The handheld illuminating device with a monitoring function as claimed in claim 7, wherein the power supply module (26) is disposed between a rear end of the upper case (11) and a rear end of the lower case (12) as well as the rear cap (14).

9. The handheld illuminating device with a monitoring function as claimed in claim 8 further comprising:
a first waterproof and dustproof cap (151) disposed at the bottom of the lower case (12) to cover the memory unit (28); and
a second waterproof and dustproof cap (152) disposed at the bottom of the lower case(12) to cover the signal transmission module (27).

10. The handheld illuminating device with a monitoring function as claimed in claim 9 further comprising:
a first protection ring (131) mounted in the front cover (13);
a second protection ring (141) mounted in the rear cap (14),
a first waterproof and dustproof rib (161) mounted between the upper case (11) and the lower case (12);
a second waterproof and dustproof rib (162) mounted between the lower case cap (15) and the lower case (12); and
a third waterproof and dustproof rib (163) mounted around the wireless module (23).

11. The handheld illuminating device with a monitoring function as claimed in claim 10 further comprising a charging base (30), wherein the charging base (30) comprises:
a first slot (301) for accommodating a spare power supply module (26) ;
a second slot (302) formed with a connection interface (31) therein, the connection interface (31) having two signal transmission contacts (312) and two charge contacts (311),
wherein the connection interface (31) is for electrical connections of signal transmission contacts (271) of the signal transmission module (27), and the charge contacts (311) of the connection interface (31) are for electrical connections of charge contacts (272) of the signal transmission module (27); and
the charging base (30) is provided with a USB port (32) and a power supply terminal (33).
